# FASCICULE DE BREVET EUROPEEN

(11) **EP 1 214 233 B1**
(45) Date de publication et mention de la délivrance du brevet: **29.03.2006**
(21) Numéro de dépôt: 00964309.9
(22) Date de dépôt: 15.09.2000
(51) Int. Cl.: B60T 1/00

(54) **FREIN DE PARKING NOTAMMENT POUR VEHICULE A TRACTION ELECTRIQUE**
FESTSTELLBREMSE, INSBESONDERE FÜR EIN FAHRZEUG MIT ELEKTRISCHEM ANTRIEB
PARKING BRAKE IN PARTICULAR FOR ELECTRIC-POWERED MOTOR VEHICLE

(30) Priorité: 20.09.1999 FR 9911742
(43) Date de publication de la demande: 19.06.2002
(73) Titulaire: Renault s.a.s., 92100 Boulogne Billancourt (FR)
(72) Inventeur: BAYON, Lionel, F-93100 Montreuil (FR); SELLOS, Gérard, F-78420 Carrières sur Seine (FR)
(86) Numéro de dépôt international: PCT/FR2000/002580
(87) Numéro de publication internationale: WO 2001/021461

(56) Documents cités:
- US-A- 4 369 867
- US-A- 5 170 869
- US-A- 5 526 909

## Description

La présente invention est relative à un dispositif de commande de frein de parking de véhicule comportant :
- une roue de parking dentée, reliée aux roues motrices du véhicule par un arbre d'entraînement monté rotatif autour d'un axe sur un carter de la transmission,
- un doigt de blocage monté pivotant autour d'une première broche d'axe parallèle à celui de la roue et portant un cran pouvant s'engager dans un créneau entre deux dents consécutives de la roue de parking, de façon à immobiliser les roues motrices,
- un organe de poussée solidaire d'un support 5 monté pivotant sur le carter autour d'une seconde broche d'axe parallèle à celui de la roue dentée,
- un organe de commande du pivotement du support avec l'organe de poussée, par l'intermédiaire d'un levier de transmission, de façon à repousser le doigt de blocage vers la roue dentée pour l'engagement du cran dans un créneau et le blocage de la roue, ledit organe de commande étant monté pivotant autour d'une troisième broche d'axe parallèle à celui de la roue et actionnable à partir du poste de conduite du véhicule.

Un tel dispositif de commande de frein de parking est utilisé notamment dans les véhicules automobiles à traction électriques, car le moteur de traction électrique d'un tel véhicule ne fournit pas un couple de blocage à l'arrêt du moteur, contrairement à ce que fait un moteur thermique pour un véhicule équipé d'un tel moteur.

L'un des problèmes lié à un tel dispositif de commande de frein de parking réside dans le fait que la force exercée par la roue de parking sur le doigt de blocage peut être considérable et peut dépasser une tonne si le véhicule se trouve garé sur une pente raide.

Plusieurs dispositifs de commande de frein de parking du type défini en préambule ont déjà été proposés dans la technique antérieure.

Le document US 5 526 909 montre un dispositif de commande de frein de parking d'après le préambule de la revendication 1.

Par exemple, dans DE 2 418 280, il comprend un doigt de blocage articulé destiné, pour l'immobilisation du véhicule, à pénétrer dans une denture d'une roue de parking calée sur l'arbre primaire d'un réducteur. Ce doigt de blocage est actionné par un organe de coincement de forme conique commandé à partir du sélecteur du réducteur et se déplaçant perpendiculairement au plan de la roue de parking dans lequel évolue également le doigt de blocage. Ce dernier est contraint à pénétrer dans la roue de parking par l'organe de coincement agissant sur son bord opposé à la denture, lorsque le sélecteur du réducteur est amené dans la position parking (P).

Ce frein de parking est encombrant et son desserrage peut poser des problèmes, car, en raison de la force parfois considérable exercée par la roue de parking, l'organe de coincement risque de ne pouvoir être retiré pour le desserrage du frein que moyennant une contre-force considérable nécessitant un mécanisme de desserrage complexe.

Une autre proposition de l'art antérieur est décrit dans FR 2 691 515. Dans ce cas, le doigt de blocage articulé évolue également dans le plan de la roue de parking et est actionné par un cône de poussée agissant sur le bord du doigt opposé à celui qui se trouve en regard de la périphérie de la roue de parking. Cependant, dans ce cas, le cône de poussée évolue dans le même plan que le doigt de blocage et s'appuie sur un galet de réaction, tandis que les forces qui agissent sur lui pendant le serrage du frein sont équilibrées par un ressort de traction.

Ce dispositif de commande pour frein de parking, bien que moins encombrant que le précédent, est difficile à mettre au point, présente les même problèmes au desserrage que l'agencement antérieur analysé ci-dessus et nécessite une translation relativement importante du cône de poussée prenant beaucoup de place.

La présente invention a pour but de proposer un dispositif de commande pour frein de parking dépourvu des inconvénients des dispositifs de commande de l'art antérieur.

L'invention a donc pour objet un dispositif de commande pour frein de parking du type défini en préambule et qui est caractérisé par le fait que le levier de transmission est monté pivotant autour du même axe que l'organe de commande et s'étend jusqu'au support par une extrémité libre ayant un bord actif, ledit levier de transmission étant sollicité par une force élastique appliquée par l'organe de commande, vers une position de blocage pour laquelle le bord actif du levier repousse l'organe de poussée vers le doigt de blocage dans le sens d'engagement du cran, puis échappe audit organe de poussée en le maintenant contre ledit doigt de blocage, dès que le cran se trouve en face d'un créneau,
en ce qu'il comprend également un organe de poussée cylindrique dont l'axe est parallèle à celui de la roue de parking et qui est solidaire d'un support monté pivotant sur le carter dans le plan de la roue,
et en ce que ledit levier, sous l'action de ladite force élastique, sollicite ledit organe de poussée contre ledit doigt de blocage pour, en présence d'une commande de serrage, provoquer son pivotement et celui de support et ainsi bloquer la roue de freinage dès que le doigt de blocage se trouve en face d'un créneau, pendant que ledit levier échappe audit organe de poussée en le maintenant contre ledit doigt de blocage.

Grâce à ces caractéristiques, l'opération de blocage du doigt de blocage ne fait intervenir aucune surface de coincement conique de sorte que le déverrouillage du mécanisme ne nécessite qu'un effort très modéré, même si l'effort exercé sur le doigt de blocage par la roue de parking est considérable. En outre, l'ensemble de la cinématique du dispositif de commande est parfaitement réversible et se déroule dans le plan de la roue de parking dans lequel tous les organes participant à cette cinématique peuvent être placés. Le dispositif de commande occupe ainsi un minimum de place dans le carter du réducteur.

Suivant d'autres caractéristiques de l'invention :
- ledit support est monté pivotant sur une broche solidaire du carter et contre laquelle ledit organe de poussée est en appui, et en position verrouillée, ledit organe de poussée est en contact par trois génératrices réparties à peu près régulièrement autour de son axe, respectivement avec ledit doigt de blocage, ledit levier et ladite broche, génératrices par lesquelles passent les réactions des forces engendrées par ladite roue sur ledit doigt de blocage;
- ledit organe de poussée est un galet monté à rotation libre sur ledit support;
- en configuration, serrée du frein, la réaction exercée par ledit organe de poussée sur ledit levier de transmission passe par l'axe de cet organe de poussée et par l'axe de pivotement dudit levier de transmission;
- ledit doigt de blocage présente du côté opposé à ladite roue de parking un bord concave servant de surface de came audit organe de poussée;
- ledit organe de commande actionnable à partir du poste de conduite du véhicule est formé par un secteur de sélection des configurations de ladite transmission, et ce secteur et ledit levier de transmission sont montés pivotants sur ledit carter autour d'un même axe;
- ledit secteur de sélection et ledit levier de transmission sont angulairement en appui l'un sur l'autre par l'intermédiaire de ladite force élastique et, pour le desserrage, ledit support porte un second organe de poussée coopérant avec ledit levier de transmission pour ramener ledit support dans sa position correspondant au déblocage de ladite roue de parking, par un mouvement de concert dudit secteur et dudit levier..

D'autres caractéristiques et avantages de l'invention apparaîtront au cours de la description qui va suivre donnée uniquement à titre d'exemple et faite en se référant aux dessins annexés sur lesquels:
- la figure 1 est un schéma d'implantation générale d'un frein de parking dans un véhicule automobile;
- la figure 2 est une vue en bout d'un réducteur, couvercle de protection enlevé, montrant un frein de parking associé à un dispositif de commande selon l'invention, l'opération de serrage du frein étant amorcée par le conducteur;
- la figure 3 est une vue analogue, avec arrachement partiel mettant en évidence la butée du levier de transmission et montrant la configuration serrée du frein de parking;
- la figure 3A montre une vue en coupe partielle prise selon la ligne IIIA-IIIA de la figure 3;
- la figure 4 est une vue analogue montrant une configuration d'attente du frein de parking dans laquelle le serrage est amorcé, alors que la partie active du doigt de blocage se trouve en face d'une dent de la roue de parking;
- la figure 5 est une vue analogue montrant à partir de la configuration de la figure 3, comment une commande de serrage peut aboutir; et
- la figure 6 est une vue analogue montrant le desserrage du frein de parking selon l'invention.

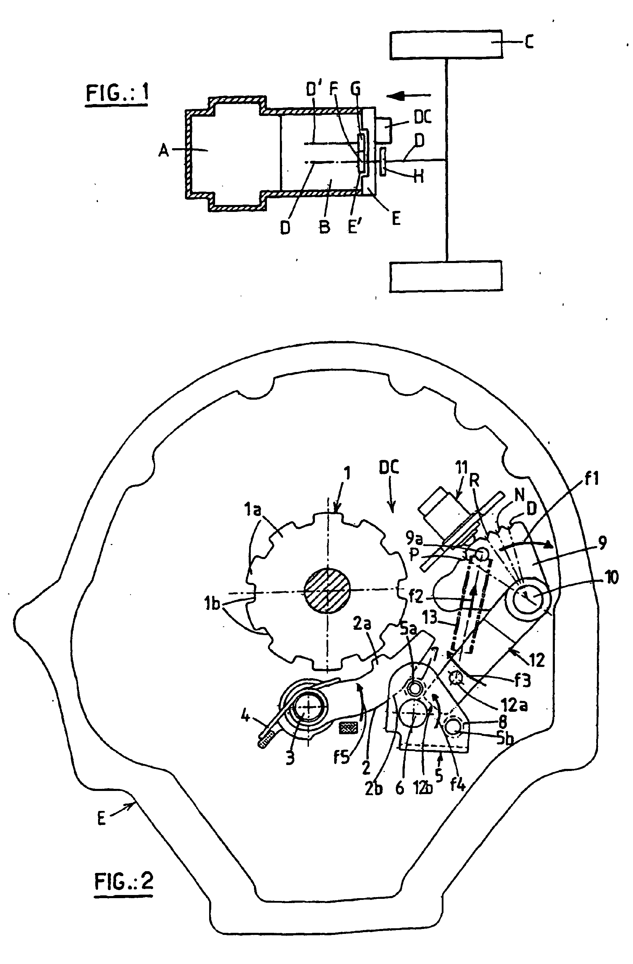

Sur la figure 1, le moteur A, par exemple électrique, d'un véhicule automobile, est associé à un réducteur B qui transmet le mouvement aux roues C, par l'intermédiaire de l'arbre d'entraînement D. Celui-ci traverse le carter E, constituant la paroi frontale du réducteur B. Un évidement E' est ménagé dans la masse de la paroi frontale du carter. Cet évidement E' reçoit les pignons d'extrémité F et G de deux arbres D et D' du mécanisme de réduction. Une roue de parking 1 est portée par l'arbre D et présente des dents la séparée par des créneaux 1b (figure 2). Elle coopère avec un dispositif de commande DC selon l'invention.

Selon l'exemple de réalisation représenté aux figures 2 à 6, le dispositif de commande DC selon l'invention comprend un doigt de blocage 2 monté pivotant sur une broche 3 solidaire du carter E, dans le plan de la roue de parking 1. Ce doigt de blocage 2 présente une forme arquée en épousant une partie de la périphérie de la roue de parking 1 et il pivote sur la broche 3 autour d'un axe parallèle à l'axe de la roue.de parking 1. Un ressort en épingle 4 est monté sur la broche 3 et sollicite le doigt de blocage 2 dans un sens qui éloigne sa partie active de la périphérie de la roue de parking 1.

Cette partie active du doigt de blocage 2 se présente sous la forme d'un cran 2a en saillie de son bord concave et destiné à pénétrer dans l'un quelconque des créneau 1b de la roue de parking 1.

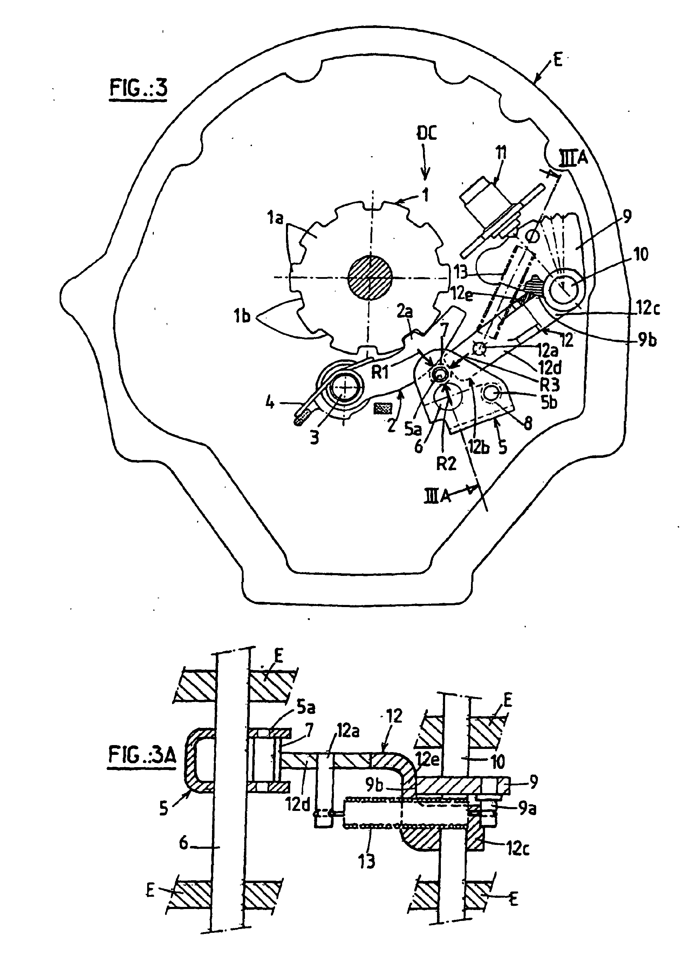

Le dispositif de commande DC comprend également un support 5 porte-galets qui est monté pivotant sur le carter E autour d'un axe parallèle à l'axe de la roue de parking 1, à l'aide d'une broche 6 (voir également la figure 3A). Ce support 5 comprend deux organes de poussée 7 et 8. Ceux-ci sont réalisés de préférence sous forme de galets montés à rotation libre sur des pivots 5a et 5b respectifs solidaires du support 5.

Le réducteur B comprend un secteur 9 de sélecteur monté pivotant dans le carter E et dont les diverses positions peuvent être commandées de la manière habituelle, à partir du poste de conduite du véhicule. Son montage pivotant est assuré par une broche 10 fixée dans le carter E. Les positions du secteur de sélecteur 9 sont matérialisées dans l'ordre par des crans, respectivement P (parking), R (reverse ou marche arrière), N (neutre) et D (drive ou marche avant). Ces crans P, R, N et D coopèrent avec un dispositif 11 de positionnement à bille à ressort bien connu.

Autour de la broche 10 est également monté pivotant un levier de transmission 12 assurant la transmission de la commande imposée au secteur 9 vers le doigt de blocage 2. Un ressort hélicoïdal de traction 13 est accroché entre un pion 9a du secteur 9 et un pion 12a du levier de transmission 12.

L'extrémité libre de ce levier 12 s'étend jusque dans la zone d'évolution du support 5 et peut agir sur celui-ci par son bord actif 12b par l'intermédiaire des galets 7 et 8 pour le faire pivoter respectivement dans un sens ou dans l'autre.

Selon une disposition avantageuse, le galet 7 peut rouler sur la broche 6 qui lui sert d'organe d'appui ou de réaction. Ce galet 7 coopère également avec le bord convexe 2b du doigt de blocage 2 situé du côté de ce doigt opposé à la roue de parking 1. Ce bord 2b lui sert de surface de came.

La figure 3A montre en coupe notamment la forme du levier de transmission 12. Il comporte une portion d'articulation 12c reliée à une portion d'extrémité libre 12d par une partie de connexion 12e pliée à angle droit par rapport aux portions 12c et 12d. Le secteur 9 est monté sur la broche 10 en relation de superposition par rapport à la portion d'articulation 12c du levier 12. De ce fait, le bord 9b du secteur 9 est contigu à la portion de connexion 12e qui sert ainsi de butée pour le secteur 9. Le ressort 13 sollicite le levier 12 de manière qu'il puisse s'appuyer sur la butée formée par la portion de connexion 12e.

Le fonctionnement de ce dispositif de commande de frein de parking va maintenant être décrit à l'aide des figures 2 à 6 sur lesquelles des références identiques désignent chaque fois les mêmes éléments.

Tout d'abord sur la figure 2, on suppose que le conducteur amorce une commande d'immobilisation de son véhicule. A cet effet, il déplace le sélecteur du réducteur B de la position R vers la position P. Sur la figure 2, le secteur 9 est donc en cours de déplacement dans le sens de la flèche f1 Le ressort 13 exerce une force sur le levier 12 dans le sens de la flèche f2 en maintenant le contact entre ce dernier et le secteur 9 au niveau de la butée 12e (flèche f3).

De ce fait, le support 5 est entraîné en rotation dans le sens de la flèche f4, car le bord actif 12b du levier 12 repousse le galet 7. Ce dernier étant à son tour en contact avec le bord convexe 2b du doigt de blocage 2, ce dernier pivote dans le sens de la flèche f5 à l'encontre de l'action du ressort 4. Il est supposé que la force du ressort 13 est supérieure à celle du ressort 4.

Dès lors, deux situations peuvent se présenter. Soit le cran 2a du doigt de blocage 2 se trouve en face d'un créneau 1b de la roue de parking 1, soit il se trouve en face d'une dent la de cette roue.

La figure 3 illustre le premier cas. On voit que le secteur 9 du sélecteur s'est déplacé et s'est verrouillé sur le cran P amené en face du dispositif de positionnement 11. Le ressort 13 maintenant toujours le contact entre le secteur 9 et le levier 12 a repoussé encore davantage le galet 7 et a fait pivoter le doigt de blocage 2 dont le cran 2a finit par pénétrer dans le créneau 1b qui lui fait face.

Cependant, le bord 12b du levier a alors échappé au galet 7 tout en continuant à faire pivoter le support S. Le galet 7 pour sa part a roulé autour de la broche 6, tout en remontant le bord 2b formant came du doigt de blocage 2. A terme, le galet 7 se trouve verrouillé sous la triple action du doigt de blocage 2, de la broche 6 et du levier 12 qui exercent sur lui des réactions respectives R1, R2 et R3 en des génératrices de contact qui sont à peu près régulièrement réparties autour de l'axe du galet 7. L'effort exercé par la roue de parking 1 sur le doigt de blocage 2 est ainsi repris d'une part par la broche 6 et d'autre part par le levier 12, l'agencement étant tel que la réaction R3 exercée par le levier 12 sur le galet 7 passe par l'axe de la broche 10. De la sorte, dans la configuration de serrage du frein, aucun couple de rotation n'est exercé sur le levier 12, l'ensemble étant en équilibre.

On peut ainsi obtenir un blocage efficace sans coincement de la roue de parking 1 dont, dès lors, le déblocage ne nécessite qu'un effort très modéré. Les pièces du dispositif de commande peuvent donc être relativement légères et peu encombrantes.

Cependant, il peut également arriver que le cran 2a du doigt de blocage 2 rencontre une dent 1a de la roue de parking 1, pendant que le conducteur sélectionne la position P du secteur 9.

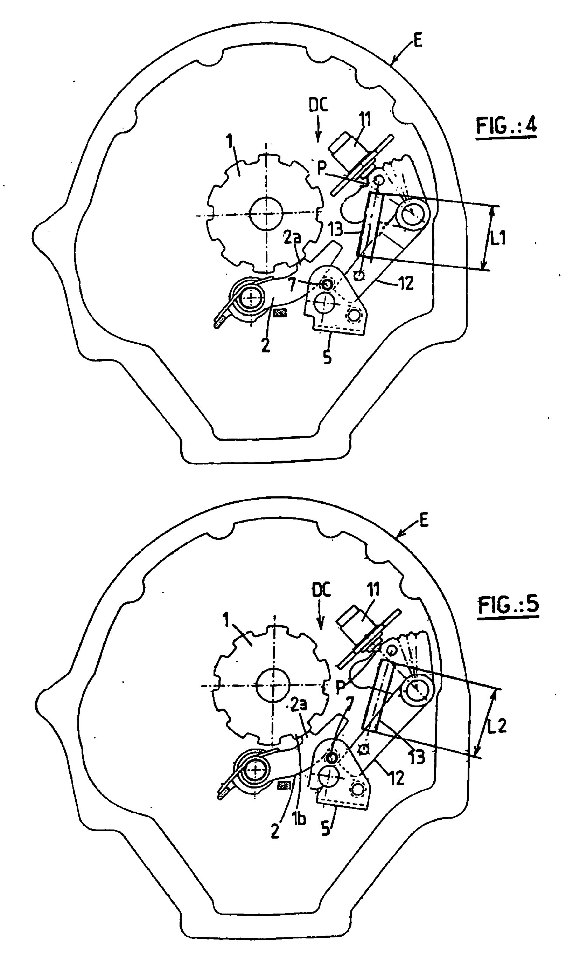

Dans ce cas, le début du fonctionnement du dispositif de commande est le même que précédemment décrit à propos de la figure 2. Cependant, à partir du moment (figure 4) où le cran 2a entre en contact avec la dent 1a de la roue 1, la poursuite du pivotement du secteur 9 entraîne la séparation au niveau de la butée 12e du secteur 9 et du levier 12, pendant que le ressort 13 s'allonge d'une longueur L1 (figure 4) à une longueur L2 (figure 5). Cette situation constitue une configuration d'attente du dispositif de commande DC.

Cette configuration d'attente perdure tant que la roue de parking 1 n'a pas tournée et pour autant naturellement que la position P du secteur 9 soit maintenue. Cependant, dès que, dans cette situation, le véhicule se déplace très légèrement, la roue de parking 1 est entraînée en rotation en présentant un créneau 1b devant le cran 2a du doigt de blocage 2. Le ressort 13 ramène alors immédiatement les pièces du dispositif dans la configuration de la figure 3. le secteur 9 et le levier de transmission 12 venant de nouveau en butée.

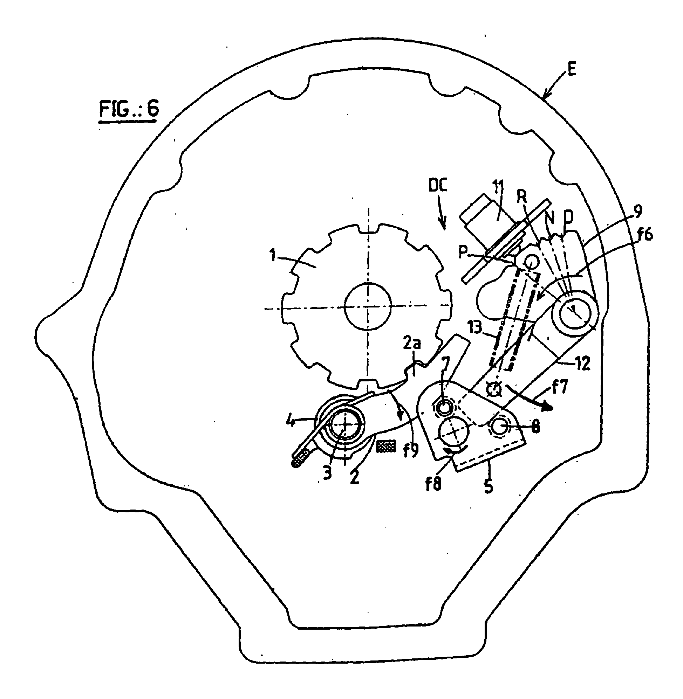

La figure 6 illustre l'opération de desserrage du frein de parking. Le secteur 9 est alors déplace dans le sens de la flèche f6, le cran P étant dégagé de la bille du dispositif de positionnement 11. Il en résulte un pivotement de l'ensemble formé par le secteur 9 et du levier 12 (flèche f7), ce dernier étant mis en contact avec le galet 8 porté par le support 5. Ce dernier ce déplace donc pour dégager le galet 7 du doigt de blocage 2, moyennant quoi, ce dernier relâche la roue de parking 2 sous l'action du ressort 4. Le levier 12 peut quitter le galet 7 sans effort notable, les forces de frottement étant minimales.

L'invention n'est pas limitée au mode de réalisation décrit et représenté qui n'a été choisi qu'à titre d'exemple.

## Revendications

1. Dispositif de commande de frein de parking de véhicule comportant :
- une roue de parking dentée (1), reliée aux roues motrices du véhicule par un arbre d'entraînement (D) monté rotatif autour d'un axe sur un carter (E) de la transmission,
- un doigt de blocage (2) monté pivotant autour d'une première broche (3) d'axe parallèle à celui de la roue de parking dentée (1) et portant un cran (2a) pouvant s'engager dans un créneau (1b) entre deux dents consécutives (1a) de la roue de parking (1), de façon à immobiliser les roues motrices (C)
- un organe de poussée cylindrique (7) solidaire d'un support (5) monté pivotant sur le carter (E) autour d'une seconde broche (6) d'axe parallèle à celui de la roue de parking dentée (1)
- un organe (9) de commande du pivotement du support (5) avec l'organe de poussée cylindrique (7), par l'intermédiaire d'un levier de transmission (12), de façon à repousser le doigt de blocage (2) vers la roue dentée (1) pour l'engagement du cran (2a) dans un créneau (1b) et le blocage de la roue (1), ledit organe de commande (9) étant monté pivotant autour d'une troisième broche (10) d'axe parallèle à celui de la roue de parking dentée (1) et actionnable à partir du poste de conduite du véhicule,
**caractérisé par le fait que** le levier de transmission (12) est monté pivotant autour du même axe (10) que l'organe de commande (9) et s'étend jusqu'au support (5) par une extrémité libre ayant un bord actif (12b), le dit levier de transmission (12) étant sollicité par une force élastique appliquée par l'intermédiaire de l'organe de commande (9), vers une position de blocage pour laquelle le bord actif (12b) du levier (12) repousse l'organe de poussée (7) vers le doigt de blocage (2) dans le sens d'engagement du cran (2a), puis le bord actif (12b) du levier échappe audit organe de poussée (7) en le maintenant contre ledit doigt de blocage (2), dès que le cran (2a) se trouve en face d'un créneau (1b).

2. Dispositif de commande suivant la revendication 1, **caractérisé en ce que** l'ensemble de la cinématique comportant le doigt de blocage (2), l'organe de poussée cylindrique (7) et son support (5), le levier de transmission (12) et l'organe de commande (9), est placé dans le plan de la roue de parking dentée 1).

3. Dispositif de commande suivant l'une des revendications 1 et 2, **caractérisé en ce qu'**en position verrouillée ledit organe de poussée cylindrique (7) est en contact par trois génératrices réparties à peu près régulièrement autour de son axe, respectivement avec ledit doigt de blocage (2), ledit levier (12) et ladite broche (6), génératrices par lesquelles passent les réactions (R1, R2, R3) des forces engendrées par ladite roue (1) sur ledit doigt de blocage (2).

4. Dispositif de commande suivant la revendication 3, **caractérisé en ce qu'**en configuration serrée du frein, la réaction (R3) exercée par ledit organe de poussée cylindrique (7) sur ledit levier de transmission (12) passe par l'axe (5a) de cet organe de poussée cylindrique (7) et par l'axe de pivotement (10) dudit levier de transmission (12).

5. Dispositif de commande suivant l'une quelconque des revendications 1 à 4, **caractérisé en ce que** ledit doigt de blocage (2) présente, du côté opposé à ladite roue de parking dentée (1), un bord convexe (2b) servant de surface de came audit organe de poussée cylindrique (7).

6. Dispositif de commande suivant la revendication 5, **caractérisé en ce que** ledit organe de poussée cylindrique est un galet (7) monté à rotation libre sur ledit support (5).

7. Dispositif de commande suivant le revendication 6, **caractérisé en ce que**, après application du galet de poussée (7) sur le doigt de blocage (2), le bord actif (12b) ménagé à l'extrémité libre du levier (12) échappe au galet (7) et coopère avec celui-ci pour le faire rouler autour de la broche (6) en remontant le bord convexe (2b) formant came du doigt de blocage (2).

8. Dispositif de commande suivant l'une quelconque des revendications précédentes, **caractérisé en ce que** ledit organe de commande (9) actionnable à partir du poste de conduite du véhicule est formé par un secteur de sélection des configurations (P, R, N, D) de ladite transmission.

9. Dispositif de commande suivant la revendication 8, **caractérisé en ce que** ledit secteur de sélection (9) et ledit levier de transmission (12) sont angulairement en appui l'un sur l'autre par l'intermédiaire de ladite force élastique et **en ce que** pour le desserrage, ledit support (5) porte un second organe de poussée (8) coopérant avec ledit levier de transmission (12) pour ramener ledit support (5) dans sa position correspondant au déblocage de ladite roue de parking (1), par un mouvement de concert dudit secteur (9) et dudit levier (12).

10. Dispositif de commande suivant la revendication 9, **caractérisé en ce que** le secteur de sélection (9) et le levier de transmission (12) sont reliés par un ressort (13) qui s'allonge dans une configuration d'attente pour laquelle le cran (2a) du doigt de blocage (2) se trouve en face d'une dent de la roue de parking (1) et ramène le levier de transmission (12) en butée sur le secteur de sélection (9) lorsque le cran (2a) vient en face d'un créneau (1b) de la roue de parking (1), dans la configuration serrée du frein.

## Patentansprüche

1. Vorrichtung zur Betätigung einer Standbremse eines Kraftfahrzeuges mit:
- einem Standzahnrad (1), das mit den Antriebsrädern des Fahrzeuges über eine Antriebswelle (D) verbunden ist, welche drehbar um eine Achse auf einem Getriebegehäuse (E) montiert ist,
- einer Feststellklinke (2), die um einen erste Stift (3) mit einer zu derjenigen des Standzahnrades (1) parallelen Achse schwenkbar montiert ist und einen Zahn (2a) trägt, der in eine Lücke (1b) zwischen zwei aufeinanderfolgenden Zähnen (1a) des Standrades (1) eingreifen kann, um so die Antriebsräder (C) festzustellen
- einem mit einem Träger (5) verbundenen zylindrischen Drückorgan (7), das auf dem Gehäuse (E) schwenkbar um einen zweiten Stift (6) mit einer zu derjenigen des Standzahnrades (1) parallelen Achse montiert ist
- einem Organ (9) zum Veranlassen des Schwenkens des Trägers (5) mit dem zylindrischen Drückorgan (7) über einen Übertragungshebel (12), um so die Feststellklinke (2) zum Eingreifen des Zahnes (2a) in die Lücke (1b) und zum Feststellen des Rades (1) zu dem Zahnrad (1) hin wegzudrücken, wobei das Veranlassungsorgan (9) schwenkbar um einen dritten Stift (10) mit einer zu derjenigen des Standzahnrades (1) parallelen Achse montiert ist und vom Fahrerplatz des Fahrzeuges aus betätigbar ist,
**gekennzeichnet durch** die Tatsache, dass der Übertragungshebel (12) um dieselbe Achse (10) wie das Veranlassungsorgan (9) schwenkbar montiert ist und sich über ein freies Ende mit einem aktiven Rand (12b) bis zum Träger (5) erstreckt, wobei der Übertragungshebel (12) von einer elastischen Kraft beansprucht wird, die über das Veranlassungsorgan (9) angewandt wird, hin zu einer Feststellposition, bei welcher der aktive Rand (12b) des Hebels (12) das Drückorgan (7) zur Feststellklinke (2) hin in Richtung des Eingreifens des Zahnes (2a) wegdrückt, wobei sodann der aktive Rand (12b) des Hebels dem Drückorgan (7) entgleitet, während er es weiter gegen die Feststellklinke (2) hält, sobald der Zahn (2a) sich gegenüber einer Lücke (1b) befindet.

2. Vorrichtung zur Betätigung gemäß Anspruch 1, **dadurch gekennzeichnet, dass** die Bewegungsgesamtheit mit der Feststellklinke (2), dem zylindrischen Drückorgan (7) und dessen Träger (5), dem Übertragungshebel (12) und dem Veranlassungsorgan (9) in der Ebene des Standzahnrades (1) angeordnet ist.

3. Vorrichtung zur Betätigung gemäß einem der Ansprüche 1 und 2, **dadurch gekennzeichnet, dass** in der verriegelten Position das zylindrische Drückorgan (7) über drei Mantellinien, die ungefähr regelmäßig um seine Achse verteilt sind, jeweils mit der Feststellklinke (2), dem Hebel (12) und dem Stift (6) in Kontakt ist, Mantellinien, durch welche die Gegenwirkungen (R1, R2, R3) der Kräfte hindurchgehen, die durch das Rad (1) auf die Feststellklinke (2) erzeugt werden.

4. Vorrichtung zur Betätigung gemäß Anspruch 3, **dadurch gekennzeichnet, dass** in der Konfiguration der angezogenen Bremse die durch das zylindrische Drückorgan (7) auf den Übertragungshebel (12) ausgeübte Gegenkraft (R3) durch die Achse (5a) dieses zylindrischen Drückorgans (7) und durch die Schwenkachse (10) des Übertragungshebels (12) hindurchgeht.

5. Vorrichtung zur Betätigung gemäß einem der Ansprüche 1 bis 4, **dadurch gekennzeichnet, dass** die Feststellklinke (2) auf der dem Standzahnrad (1) entgegengesetzten Seite einen konvexen Rand (2b) aufweist, der dem zylindrischen Drückorgan (7) als Nockenfläche dient.

6. Vorrichtung zur Betätigung gemäß Anspruch 5, **dadurch gekennzeichnet, dass** das zylindrische Drückorgan eine Rolle (7) ist, die frei drehbar auf dem Träger (5) montiert ist.

7. Vorrichtung zur Betätigung gemäß Anspruch 6, **dadurch gekennzeichnet, dass** nach Anwendung der Druckrolle (7) auf die Feststellklinke (2) der aktive Rand (12b), der am freien Ende des Hebels (12) vorgesehen ist, der Rolle (7) entgleitet und mit dieser zusammenwirkt, um sie unter Hochwandern des konvexen Randes (2b), der eine Nocke der Feststellklinke (2) bildet, um den Stift (6) rollen zu lassen.

8. Vorrichtung zur Betätigung gemäß einem der vorhergehenden Ansprüche, **dadurch gekennzeichnet, dass** das von dem Fahrerplatz des Fahrzeuges aus betätigbare Veranlassungsorgan (9) durch einen Sektor zur Auswahl der Konfigurationen (P, R, N, D) des Getriebes gebildet ist.

9. Vorrichtung zur Betätigung gemäß Anspruch 8, **dadurch gekennzeichnet, dass** der Auswahlsektor (9) und der Übertragungshebel (12) sich über die elastische Kraft winkelförmig aufeinander abstützen, und **dadurch**, dass der Träger (5) für das Lösen ein zweites Drückorgan (8) trägt, welches mit dem Übertragungshebel (12) zusammenwirkt, um den Träger (5) über eine abgestimmte Bewegung des Sektors (9) und des Hebels (12) in seine Position zurückzuführen, die einer Entriegelung des Standrades (1) entspricht.

10. Vorrichtung zur Betätigung gemäß Anspruch 9, **dadurch gekennzeichnet, dass** der Auswahlsektor (9) und der Übertragungshebel (12) über eine Feder (13) verbunden sind, die sich in einer Wartekonfiguration, in welcher der Zahn (2a) der Feststellklinke (2) sich gegenüber einem Zahn des Standrades (1) befindet, verlängert und den Übertragungshebel (12) auf den Auswahlsektor (9) in Anschlag bringt, wenn der Zahn (2a) sich gegenüber eine Lücke (1b) des Standrades (1) begibt, in der angezogenen Konfiguration der Bremse.

## Claims

1. A control device for a parking brake of a vehicle comprising:
- a toothed parking wheel (1) connected to the drive wheels of the vehicle by means of a drive shaft (D) mounted to rotate about an axis on a casing (E) of the transmission,
- a locking finger (2) mounted to pivot about a first spindle (3) whose axis is parallel to that of the toothed parking wheel (1) and bearing a lug (2a) which may engage in a notch (1b) between two consecutive teeth (1a) of the parking wheel (1) so as to immobilise the drive wheels (C),
- a cylindrical thrust member (7) rigid with a support (5) mounted to pivot on the casing (E) about a second spindle (6) whose axis is parallel to that of the toothed parking wheel (1),
- a member (9) controlling the pivoting of the support (5) with the cylindrical thrust member (7), by means of a transmission lever (12), so as to push the locking finger (2) back towards the toothed wheel (1) in order to engage the lug (2a) in a notch (1b) and lock the wheel (1), the control member (9) being mounted to pivot about a third spindle (10) whose axis is parallel to that of the toothed parking wheel (1) and may be actuated from the driving station of the vehicle,
**characterised in that** the transmission lever (12) is mounted to pivot about the same axis (10) as the control member (9) and extends up to the support (5) via a free end having an active edge (12b), the transmission lever (12) being urged by an elastic force applied by means of the control member (9) towards a locking position for which the active edge (12b) of the lever (12) pushes the thrust member (7) back towards the locking finger (2) in the direction of engagement of the lug (2a), then as soon as the lug (2a) is opposite a notch (1b) the active edge (12b) of the lever is released from the thrust member (7) while holding it against the locking finger (2).

2. A control device as claimed in claim 1, **characterised in that** the kinematic assembly comprising the locking finger (2), the cylindrical thrust member (7) and its support (5), the transmission lever (12) and the control member (9) is disposed in the plane of the toothed parking wheel (1).

3. A control device as claimed in one of claims 1 and 2, **characterised in that** in the locked position, the cylindrical thrust member (7) is in contact along three generatrices distributed more or less regularly about its axis, respectively with the locking finger (2), the lever (12) and the spindle (6), through which generatrices the reactions (R1, R2, R3) of the forces generated by the wheel (1) on the locking finger (2) pass.

4. A control device as claimed in claim 3, **characterised in that** when the brake is applied, the reaction (R3) exerted by the cylindrical thrust member (7) on the transmission lever (12) passes through the axis (5a) of this cylindrical thrust member (7) and through the pivoting axis (10) of the transmission lever (12).

5. A control device as claimed in any one of claims 1 to 4, **characterised in that** the locking finger (2) comprises, on the side opposite the toothed parking wheel (1), a convex edge (2b) acting as a cam surface for the cylindrical thrust member (7).

6. A control device as claimed in claim 5, **characterised in that** the cylindrical thrust member is a roller (7) mounted to rotate freely on the support (5).

7. A control device as claimed in claim 6, **characterised in that** after the thrust roller (7) is applied to the locking finger (2), the active edge (12b) provided at the free end of the lever (12) is released from the roller (7) and cooperates therewith in order to cause it to roll about the spindle (6), raising the convex edge (2b) forming a cam of the locking finger (2).

8. A control device as claimed in any one of the preceding claims, **characterised in that** control member (9) which may be actuated from the driving station of the vehicle is formed by a selection quadrant of the configurations (P, R, N, D) of the transmission.

9. A control device as claimed in claim 8, **characterised in that** the selection quadrant (9) and the transmission lever (12) bear angularly on one another by means of the elastic force and **in that** for release, the support (5) supports a second thrust member (8) cooperating with the transmission lever (12) in order to bring the support (5) into its position corresponding to the unlocking of the parking wheel (1) by a concerted movement of the quadrant (9) and the lever (12).

10. A control device as claimed in claim 9, **characterised in that** the selection quadrant (9) and the transmission lever (12) are connected by a spring (13) which is elongated in a stand-by configuration in which the lug (2a) of the locking finger (2) is opposite a tooth of the parking wheel (1) and brings the transmission lever (12) to abut on the selection quadrant (9) when the lug (2a) is opposite a notch (1b) of the parking wheel (1) in the engaged configuration of the brake.
